# EUROPÄISCHE PATENTSCHRIFT

(11) **EP 3 881 568 B1**
(45) Veröffentlichungstag und Bekanntmachung des Hinweises auf die Patenterteilung: **03.01.2024**
(21) Anmeldenummer: 19828957.1
(22) Anmeldetag: 14.11.2019
(51) Int. Cl.: H04W 4/02, H04N 1/00, H04N 1/21

(54) **VERFAHREN ZUR AUFNAHME VON BILDINFORMATIONEN MIT EINEM MOBILEN ENDGERÄT UND ÜBERTRAGUNG DER BILDINFORMATIONEN AN EINE MIT DEM ENDGERÄT DATENLEITEND VERBUNDENE SERVEREINRICHTUNG**
METHOD FOR RECORDING IMAGE INFORMATION USING A MOBILE TERMINAL AND FOR TRANSMITTING THE IMAGE INFORMATION TO A SERVER DEVICE CONNECTED TO THE TERMINAL FOR DATA EXCHANGE THEREWITH
PROCÉDÉ POUR L'ENREGISTREMENT D'INFORMATIONS D'IMAGE AU MOYEN D'UN DISPOSITIF TERMINAL MOBILE ET LA TRANSMISSION DES INFORMATIONS D'IMAGE À UN DISPOSITIF SERVEUR CONNECTÉ POUR TRANSMISSION DE DONNÉES AU DISPOSITIF TERMINAL

(30) Priorität: 14.11.2018 LU 101003
(43) Veröffentlichungstag der Anmeldung: 22.09.2021
(73) Patentinhaber: 2KS Cloud Services GmbH, 64367 Mühltal (DE)
(72) Erfinder: KLINGLER, Jörg, 64297 Darmstadt (DE)
(74) Vertreter: Habermann Intellectual Property Partnerschaft von Patentanwälten mbB
(86) Internationale Anmeldenummer: PCT/EP2019/081400
(87) Internationale Veröffentlichungsnummer: WO 2020/099598

(56) Entgegenhaltungen:
- JP-A- 2014 179 816
- Secunet: "Whitepaper SINA Workflow", , 30. Juni 2016 (2016-06-30), Seiten 1-20, XP055602596, Gefunden im Internet: URL:http://docplayer.org/113556339-Whitepa per-sina-workflow.html [gefunden am 2019-07-04]

## Beschreibung

Die Erfindung betrifft ein Verfahren zur Aufnahme von Bildinformationen mit einem mobilen Endgerät und Übertragung der Bildinformationen an eine mit dem Endgerät datenleitend verbundene Servereinrichtung, wobei mit einer Kameraeinrichtung des mobilen Endgeräts von einem Nutzer ausgelöst die Bildinformationen eines Dokuments aufgenommen werden, wobei in einem Hauptschritt H1 die Bildinformationen von dem Nutzer mit der Kameraeinrichtung des Endgeräts aufgenommen werden, wobei in einem Hauptschritt H2 das Endgerät die Bildinformationen und Metadaten an die Servereinrichtung übermittelt.

Im Zuge der Digitalisierung finden beispielsweise in Behörden wie auch in privatwirtschaftlichen Unternehmen zunehmend elektronische Dokumentenverwaltungs- und Vorgangsbearbeitungssysteme Verwendung. Von derartigen Systemen verwaltete und bearbeitete elektronische Dokumente können entweder direkt elektronisch oder mittels Scannen von Papierdokumenten erstellt sein. Letzteres geschieht zumeist in den jeweiligen Poststellen nach Eingang der üblicherweise per Post eingehenden Papierdokumente.

Um auf ein anschließendes kostspieliges Archivieren der eingescannten Papierdokumente verzichten zu können muss gewährleistet sein, dass die Papierdokumente rechts- und revisionssicher elektronisch hinterlegt werden. Es ist bekannt, dass hierfür die Papierdokumente unter Beachtung relevanter technisch-organisatorischer Maßnahmen in den Behörden oder den Unternehmen an stationären Endgeräten wie beispielsweise Scannern oder kombinierten Kopier- und Druckeinrichtungen mit Scanfunktion eingescannt und an eine Servereinrichtung übermittelt werden. Nach dem Scannen sind die Papierdokumente durch elektronische Dokumente ersetzt und können vernichtet werden. In der Technischen Richtlinie 03138 "Ersetzendes Scannen" herausgegeben von dem Bundesamt für Sicherheit in der Informationstechnik in der zuletzt aktualisierten Version 1.2 vom 15. Juni 2018 wird näher auf die technisch-organisatorischen Maßnahmen in Abhängigkeit von einem Schutzbedarf bezüglich der einzuscannenden Papierdokumente eingegangen.

Insbesondere Mitarbeiter im Außendienst können jedoch nicht jederzeit auf die stationären Endgeräte zurückgreifen, so dass sich das Scannen von den von dem Mitarbeiter erhaltenden Papierdokumenten und daher auch ein Zugriff der Dokumentenverwaltungs- und Vorgangsbearbeitungssysteme auf die genannten Papierdokumente verzögert. Auch können Papierdokumente verloren gehen, wie es beispielsweise für Reisebelege von sich auf Geschäftsreisen befindlichen Mitarbeitern hinreichend bekannt ist.

In der Druckschrift JP 2014 179816 A wird ein Verfahren zur dezentralen Erfassung und Speicherung von Dokumenteninformationen auf verschiedenen Scanner-Einheiten beschrieben. Die von den verschiedenen Scanner-Einheiten erfassten Dokumente werden zusätzlich auf einem zentralen Server gespeichert.

Als eine Aufgabe der Erfindung wird es deshalb angesehen, ein Verfahren derart auszugestalten, dass ein Nutzer bei Erhalt eines Dokuments Bildinformationen des Dokuments ortsungebunden zeitnah auf einem zentralen Datenspeicher dauerhaft speichern kann.

Die Aufgabe wird erfindungsgemäß dadurch gelöst, dass in einem Hauptschritt H3 die Servereinrichtung die Bildinformationen zusammen mit einem den Bildinformationen eindeutig zuordenbaren ersten Dokumentenschlüssel in einem Serverzwischenspeicher der Servereinrichtung zwischenspeichert und wobei in einem Hauptschritt H4 die Servereinrichtung die Bildinformationen zusammen mit einem innerhalb eines nicht flüchtigen Serverspeichers eindeutig dem Dokument zuordenbaren zweiten Dokumentenschlüssel in dem nicht flüchtigen Serverspeicher speichert, wenn eine vorgegebene Einspeicherbedingung erfüllt ist.

Durch eine derartige Ausgestaltung des Verfahrens kann der Nutzer zeitnah nach dem Erhalt des Dokuments das Dokument ortsungebunden mit dem dem Nutzer zur Verfügung stehenden mobilen Endgerät in elektronischer Form auf der Servereinrichtung dauerhaft speichern. Vorzugsweise ist das mobile Endgerät ein die Kameraeinrichtung aufweisendes Mobilfunkendgerät, welches über eine auf Mobilfunksignalen basierende mobile Datenverbindung mit der Servereinrichtung datenleitend verbunden ist. Alternativ kann das mobile Endgerät beispielsweise auch durch einen tragbaren Computer mit einer Mobilfunkeinrichtung, einen tastaturlosen Computer in Flachbauweise, ein elektronisches Buch, eine Uhr mit der Mobilfunk- und der Kameraeinrichtung oder ein ähnliches elektronisches Gerät mit der Mobilfunk- und der Kameraeinrichtung verkörpert sein.

Durch das Verwenden der Kameraeinrichtung zur Aufnahme der Bildinformationen des Dokuments muss der Nutzer beispielsweise keinen unhandlichen mobilen Scanner mit sich führen. Die Aufnahme der Bildinformationen mit der Kameraeinrichtung kann zügig durchgeführt werden. Vorteilhafterweise weist die Kameraeinrichtung eine große Tiefenschärfe auf, so dass die Bildinformationen auch nicht planer oder schräg zu einer optischen Achse der Kameraeinrichtung ausgerichteter Dokumente scharf aufgenommen werden können. Besonders vorteilhafterweise ist die Kameraeinrichtung bildstabilisiert, um eine Wahrscheinlichkeit eines Verwackelns bei der Aufnahme der Bildinformationen zu reduzieren.

Das Dokument kann ein näherungsweise zweidimensionales Objekt wie beispielsweise ein einseitig oder doppelseitig bedruckter Papierbogen sein. Das Dokument kann auch ein dreidimensionales Objekt wie beispielsweise ein verunfalltes Fahrzeug sein.

Die Servereinrichtung kann mehrere Serverelemente umfassen. Beispielsweise kann der nicht flüchtige Serverspeicher der Servereinrichtung als mindestens ein Fileserverelement mit jeweils mindestens einem Speicherelement ausgeführt sein. Vorteilhafterweise ist der nicht flüchtige Serverspeicher als eine redundante Anordnung von Speicherelementen ausgeführt, um im Falle eines Versagens eines Speicherelements einem Datenverlust vorzubeugen. Die Speicherelemente können beispielsweise Festplatten oder nichtflüchtige Halbleiterlaufwerke sein. Um eine datenleitende Verbindung zwischen dem mobilen Endgerät und der Servereinrichtung bereitzustellen kann die Servereinrichtung einen mit dem Internet verbundenen Webserver aufweisen.

Die Bildinformationen werden von der Kameraeinrichtung des mobilen Endgeräts aufgenommen. Die Kameraeinrichtung weist vorzugsweise einen digitalen Bildsensor auf. Die Bildinformationen können einer von der Kameraeinrichtung generierten Bilddatei entsprechen. Die Bildinformationen können auch zur Erhöhung einer Lesbarkeit der Bildinformationen ausgehend von der Bilddatei mit Änderung beispielsweise einer Farbtiefe, einer Auflösung, eines Kontrasts oder einer Mischung daraus generiert werden, wobei im Falle einer Änderung der Bilddatei bei der Generierung der Bildinformationen vorzugsweise ein Bilddateiänderungsprotokoll den Metadaten hinzugefügt wird in welchem die an den Bildinformationen durchgeführten Änderungen protokolliert werden.

In dem Hauptschritt H1 löst der Nutzer die Aufnahme der Bildinformationen des Dokuments mit der Kameraeinrichtung des mobilen Endgeräts aus. Vorteilhafterweise werden dem Nutzer vor der Aufnahme der Bildinformationen des Dokuments auf einem Anzeigeelement des Endgeräts die aufzunehmenden Bildinformationen des Dokuments dargestellt. Vorzugsweise nimmt das mobile Endgerät automatisiert die Bildinformationen des Dokuments auf sobald die von der Kameraeinrichtung generierten Bildinformationen deutlich erkennbar sind. Alternativ ist in vorteilhafter Weise vorgesehen, dass die Aufnahme der Bildinformationen erst durch eine Aufnahmebestätigung des Nutzers ausgelöst wird.

In dem Hauptschritt H2 kann die Übertragung von Informationen von dem mobilen Endgerät zu der Servereinrichtung mit bekannten Internetübertragungsprotokollen erfolgen. Beispielsweise kann das über die mobile Datenverbindung mit dem Internet verbundene Endgerät die Datenverbindung mit dem Webserver der Servereinrichtung aufbauen und mittels eines Hypertext-Übertragungsprotokollbefehls die Bildinformationen und Metadaten an die Servereinrichtung senden. Die Servereinrichtung kann mit dem Hypertext-Übertragungsprotokollbefehl ebenfalls Informationen an das Endgerät übermitteln. Die im Folgenden beschriebene Übermittlung von Informationen kann analog über die Datenverbindung unter Verwendung der Hypertext-Übertragungsprotokollbefehle erfolgen.

Jeder der ersten Dokumentenschlüssel wird vorteilhafterweise von der Servereinrichtung nur einmalig vergeben, so dass in dem Serverzwischenspeicher den Bildinformationen jedes einzelnen Dokuments oder gegebenenfalls einer Serie von Dokumenten der erste Dokumentenschlüssel zugeordnet ist.

Es ist möglich und optional vorgesehen, dass jedem der ersten Dokumentenschlüssel ausschließlich Bildinformationen einer Aufnahme des Dokuments zugeordnet werden. So kann der Nutzer bei dem Verfahren für jeden übermittelten ersten Dokumentenschlüssel ausschließlich einmalig die Bildinformationen des Dokuments in einem Aufnahmevorgang aufnehmen.

Alternativ ist vorteilhafterweise vorgesehen, dass Bildinformationen einer Mehrzahl von Seiten eines Dokuments oder mehrerer Dokumente dem einen ersten Dokumentenschlüssel zugeordnet werden. Hierbei ist vorzugsweise optional vorgesehen, dass von dem Nutzer bei dem Hauptschritt H1 die Aufnahme eines mehrseitigen Dokuments auswählbar ist. Bei einem mehrseitigen Dokument wird der Aufnahme jeder einzelnen Seite vorteilhafterweise eine aufeinanderfolgende Dokumentenaufnahmenummer zugeordnet. Vorteilhafterweise können bei einem der ersten Dokumentenschlüssel welchem Bildinformationen einer Mehrzahl von Dokumenten zugeordnet wird die Bildinformationen in mehreren aufeinander folgenden Aufnahmeschritten erfasst werden.

Die in dem Hauptschritt H1 zusammen mit den Bildinformationen übermittelten Metadaten können für die Bildinformationen oder die Übertragung an die Servereinrichtung wesentliche weitere Daten enthalten.

Der in dem Hauptschritt H3 die Bildinformationen zusammen mit den Metadaten zwischenspeichernde Serverzwischenspeicher ist bevorzugt ein schneller nichtflüchtiger Speicher, besonders bevorzugt ein Hauptspeicher der Servereinrichtung oder gegebenenfalls eines Serverelements der Servereinrichtung.

Nach jeder Übertragung von Bildinformationen von dem Endgerät an die Servereinrichtung in dem Hauptschritt H2 kann in dem Hauptschritt H3 ein fortlaufender erster Dokumentenschlüssel erstellt werden und zusammen mit den dazugehörigen Bildinformationen in dem Serverzwischenspeicher zwischengespeichert werden. Für Anwendungen im Bereich der Buchhaltung kann es notwendig sein, dass die in dem Serverspeicher gespeicherten Bildinformationen fortlaufend nummeriert sind. Durch Nichterfüllen der Einspeicherbedingung würde es jedoch bei einem anschließenden Speichern der Bildinformationen zusammen mit dem ersten Dokumentenschlüssel bei erfüllter Einspeicherbedingung in dem Serverspeicher zu einer nicht fortlaufenden Nummerierung kommen. Daher werden bei Erfüllen der Einspeicherbedingung in Hauptschritt H4 die Bildinformationen zusammen mit dem zweiten Dokumentenschlüssel in dem Serverspeicher gespeichert. Der zweite Dokumentenschlüssel ist vorzugsweise fortlaufend nummeriert

Es ist auch möglich und erfindungsgemäß optional vorgesehen, dass bei in dem Serverspeicher zusammen mit einem der zweiten Dokumentenschlüssel gespeicherten Bildinformationen weitere Bildinformationen angefügt werden. Hierfür können vorteilhafterweise im Anschluss an das Speichern der Bildinformationen in Hauptschritt H4 erneut die Hauptschritte H1 bis H4 unter Verwendung des zuvor benutzten ersten Dokumentenschlüssels und des zuvor benutzen zweiten Dokumentenschlüssels durchgeführt werden.

Um eine nachträgliche Änderung der gespeicherten Daten zu unterbinden und das Verfahren derart revisionssicher auszugestalten, kann der Serverspeicher vorteilhafterweise nur einmalig beschreibbar ausgestaltet sein. Es ist auch möglich und erfindungsgemäß optional vorgesehen, dass die Servereinrichtung eine Protokollierdatenbank aufweist, wobei in der Protokollierdatenbank eine Kommunikation zwischen dem Endgerät und der Servereinrichtung und gegebenenfalls Schreibzugriffe auf den Serverspeicher und gegebenenfalls auf den Serverzwischenspeicher protokolliert werden. Vorzugsweise werden sämtliche Prozessschritte in der Protokollierdatenbank protokolliert.

Bei Erfüllen der Einspeicherbedingung werden in dem Hauptschritt H4 die Bildinformationen vorzugsweise zusammen mit den Metadaten von der Servereinrichtung in dem nicht flüchtigen Serverspeicher gespeichert. Die Metadaten umfassen zumindest den zweiten Dokumentenschlüssel, so dass die in dem Serverspeicher gespeicherten Bildinformationen jederzeit eindeutig dem jeweiligen Dokument zuordenbar sind. Gegebenenfalls können auch die aus den Bildinformationen ermittelten Dokumentendaten zusammen mit den Bildinformationen und den Metadaten gespeichert werden. Die Bildinformationen und die Metadaten sowie gegebenenfalls die Dokumentendaten werden vorteilhafterweise zusammen in einer Hauptdatenbank gespeichert.

Vorzugsweise wird die Einspeicherbedingung in Hauptschritt H4 automatisiert von der Servereinrichtung ausgehend von den Bildinformationen oder gegebenenfalls aus den Bildinformationen ermittelten Dokumentendaten überprüft.

Bei einem automatisierten Überprüfen der Einspeicherbedingung ist es vorzugsweise möglich und erfindungsgemäß optional vorgesehen, dass die Bildinformationen, die aus den Bildinformationen ermittelten Dokumentendaten oder beide von dem Nutzer nach dem Hauptschritt H4 an dem Endgerät verifiziert werden.

Bei nachträglichem Verifizieren der Bildinformationen und/oder aus den Bildinformationen ermittelten Dokumentendaten ist vorzugsweise vorgesehen, dass den zusammen mit den Bildinformationen in dem Serverspeicher gespeicherten Metadaten ein Dokumentenstatus zugefügt wird, wobei anhand eines Wertes des Dokumentenstatus ermittelbar ist, ob die Bildinformationen und/oder aus den Bildinformationen ermittelten Dokumentendaten von einem Nutzer nach dem Hauptschritt H4 an dem Endgerät verifiziert wurden.

Alternativ kann zur Überprüfung der Einspeicherbedingung in Hauptschritt H4 in vorteilhafter Weise vorgesehen sein, dass in einem ersten Nebenschritt N1 die Servereinrichtung die Bildinformationen des Dokuments und/oder aus den Bildinformationen ermittelte Dokumentendaten des Dokuments an das Endgerät rückübermittelt, wobei in einem Nebenschritt N2 der Nutzer an dem Endgerät die Bildinformationen und/oder die Dokumentendaten verifiziert und wobei in einem Nebenschritt N3 das Endgerät eine Verifizierungsbestätigung an die Servereinrichtung übermittelt. Bei einer derartigen Umsetzung des Verfahrens kann der Nutzer die Bildinformationen oder gegebenenfalls die aus den Bildinformationen ermittelten Dokumentendaten in Nebenschritt N2 an dem Endgerät verifizieren.

Vorzugsweise kann mit Erhalt der Verifizierungsbestätigung in Nebenschritt N3 die Einspeicherbedingung in Hauptschritt H4 erfüllt werden.

In dem Nebenschritt N1 kann die Servereinrichtung die in dem Serverzwischenspeicher gespeicherten Bildinformationen vorteilhafterweise an das Endgerät rückübermitteln. Zur Verbesserung der Lesbarkeit an dem Anzeigeelement des Endgeräts können vorzugsweise der Kontrast oder die Farbtiefe der Bildinformationen dabei automatisiert von der Servereinrichtung geändert werden. Es ist auch möglich und erfindungsgemäß optional vorgesehen, dass von der Servereinrichtung aus den Bildinformationen ermittelte Dokumentendaten wie beispielsweise ein in dem Dokument enthaltener Text an das Endgerät rückübermittelt wird.

Bei der Rückübermittlung der Bildinformationen in dem Nebenschritt N1 an das Endgerät kann den Bildinformationen vorzugsweise auch der erste Dokumentenschlüssel beigefügt sein, so dass beispielsweise bei einer Vielzahl von mit dem Endgerät aufgenommenen Bildinformationen verschiedener Dokumente, insbesondere bei einer zeitlich verzögerten Verifizierung in Nebenschritt N2 bezogen auf die Aufnahme der Bildinformationen in Hauptschritt H1, eine eindeutige Zuordnung erleichtert ist.

Eine Verifizierung der Bildinformationen oder gegebenenfalls der Dokumentendaten kann in dem Nebenschritt N2 beispielsweise durch den Nutzer an dem Endgerät durch Anzeige der Bildinformationen auf dem Anzeigeelement und anschließenden Vergleich mit dem Dokument erfolgen. Die Verifizierung der Dokumentendaten kann vorteilhafterweise alternativ an dem Endgerät durch ein automatisiertes Vorlesen des von der Servereinheit aus den Bildinformationen ermittelten Texts erfolgen.

Im Falle der erfolgreichen Verifizierung durch den Nutzer kann von dem Endgerät in dem Nebenschritt N3 die Übermittlung der Verifizierungsbestätigung an die Servereinrichtung erfolgen. Nach Erhalt der Verifizierungsbestätigung an der Servereinrichtung können die Bildinformationen zusammen mit den Metadaten vorzugsweise in dem Hauptschritt H4 von der Servereinrichtung in dem nicht flüchtigen Serverspeicher gespeichert. Die Metadaten umfassen zumindest den zweiten Dokumentenschlüssel, so dass die in dem Serverspeicher gespeicherten Bildinformationen jederzeit eindeutig dem jeweiligen Dokument zuordenbar sind. Gegebenenfalls können auch die aus den Bildinformationen ermittelten Dokumentendaten zusammen mit den Bildinformationen und den Metadaten gespeichert werden. Die Bildinformationen und die Metadaten sowie gegebenenfalls die Dokumentendaten werden vorteilhafterweise zusammen in einer Hauptdatenbank gespeichert.

Um die in dem Serverspeicher gespeicherten Bildinformationen eindeutig dem die Bildinformationen aufnehmenden Endgerät zuordnen zu können ist in vorteilhafter Weise vorgesehen, dass vor dem Hauptschritt H1 in einem ersten Initialisierungsschritt I1 das Endgerät einmalig eine unverwechselbare Gerätenummer bestimmt. Der erste Initialisierungsschritt I1 wird vorteilhafterweise durch den Nutzer einmalig bei einer ersten Inbetriebnahme des Endgeräts für das Verfahren ausgeführt. Besonders vorteilhafterweise kann der Nutzer den ersten Initialisierungsschritt I1 nur einmalig ausführen, so dass die einmalig vergebene Gerätenummer durch den Nutzer nicht geändert werden kann. Die unverwechselbare Gerätenummer kann beispielsweise die Hardware-Adresse der Mobilfunkeinrichtung des Endgeräts sein. Die Gerätenummer kann alternativ über eine von einem Zeitpunkt der Inbetriebnahme des Verfahrens auf dem Endgerät abhängigen Zufallsgenerator ermittelt werden. Die Gerätenummer kann in dem Serverspeicher in einer Nutzerdatenbank gespeichert werden.

Um die Datenkommunikation zwischen der Servereinrichtung und dem Endgerät sicherer auszugestalten ist bei einer vorteilhaften Umsetzung des Erfindungsgedankens vorgesehen, dass vor dem Hauptschritt H1 in einem zweiten Initialisierungsschritt I2 das Endgerät einmalig der Servereinrichtung die Gerätenummer übermittelt, wobei die Servereinrichtung dem Endgerät einmalig einen Geräteschlüssel übermittelt, wobei die Servereinrichtung die Gerätenummer und den dazugehörigen Geräteschlüssel in dem Serverspeicher der Servereinrichtung speichert. Der von der Servereinrichtung ermittelte Geräteschlüssel kann mit einem von dem Zeitpunkt der Generation des Geräteschlüssels abhängigen Zufallsgenerator ermittelt werden. Der Geräteschlüssel kann zusammen mit der Gerätenummer in der Nutzerdatenbank gespeichert werden.

Um die aufgenommenen Bildinformationen dem jeweiligen Nutzer zuordnen zu können ist vorzugsweise vorgesehen, dass vor dem Hauptschritt H1 der Nutzer sich in einem Authentifizierungsschritt A1 an dem Endgerät mit persönlichen Zugangsdaten anmeldet, wobei die Zugangsdaten mit der Gerätenummer von dem Endgerät an die Servereinrichtung übertragen werden und wobei von der Servereinrichtung die Gerätenummer zusammen mit den Zugangsdaten des Nutzers in dem Serverspeicher gespeichert werden. Die Zugangsdaten können beispielsweise eine E-Mail-Adresse und ein dazugehöriges Passwort des Nutzers sein. Die Nutzerdaten können bei jedem Authentifizierungsvorgang an dem Endgerät an die Servereinheit übermittelt und in dem Serverspeicher gespeichert werden. Derart kann bei der Verwendung des Endgeräts für ein dauerhaftes Speichern der Bildinformationen durch mehrere Nutzer den jeweiligen gespeicherten Bildinformationen der dazugehörige Nutzer zugeordnet werden.

Das Endgerät kann darüber hinaus bei der erstmaligen Inbetriebnahme einem Initialnutzer permanent zugeordnet werden. Derart kann beispielsweise das Endgerät in der Nutzerdatenbank dem Nutzer und dem Initialnutzer zugeordnet werden. Hierbei kann der Geräteschlüssel in der Nutzerdatenbank dem Initialnutzer eindeutig zugeordnet werden. Darüber hinaus kann in einer Protokolldatenbank ein Zeitraum einer Nutzung des jeweiligen Endgeräts durch den jeweiligen Nutzer protokolliert werden.

Um den Authentifizierungsschritt A1 sicherer auszugestalten ist gemäß einer vorteilhaften Umsetzung des Verfahrens vorgesehen, dass bei dem Authentifizierungsschritt A1 auf dem Endgerät eine Authentifizierungsprüfsumme der Gerätenummer, der Zugangsdaten und des Geräteschlüssels ermittelt wird, wobei die Authentifizierungsprüfsumme von dem Endgerät an die Servereinrichtung übermittelt wird, wobei auf der Servereinrichtung aus der von dem Endgerät übermittelten Gerätenummer wie auch aus der von dem Endgerät übermittelten Zugangsdaten sowie aus dem in dem Serverspeicher gespeicherten und der Gerätenummer zugeordneten Geräteschlüssel die Authentifizierungsprüfsumme ermittelt wird, so dass bei einer Identität der von dem Endgerät übermittelten und der auf der Servereinrichtung ermittelten Authentifizierungsprüfsumme eine Integrität der an die Servereinrichtung übermittelten Gerätenummer wie auch der Zugangsdaten gewährleistet wird.

Um den Nutzer von einem in dem Hauptschritt H4 erfolgten erfolgreichen Speichern der Bildinformationen zusammen mit den Metadaten in dem Serverspeicher der Servereinrichtung zu informieren ist vorzugsweise vorgesehen, dass nach dem Hauptschritt H4 in einem Bestätigungsschritt B1 die Servereinrichtung eine Speicherbestätigung an das Endgerät übermittelt. Die Speicherbestätigung kann dem Nutzer an dem Endgerät beispielsweise in Text- oder Bildform, akustisch oder mittels Vibration des Endgeräts zukommen. Der Nutzer kann im Anschluss an den Eingang der Speicherbestätigung das Dokument gegebenenfalls vernichten oder einem Wertstoffrecycling zuführen.

Um mit dem Verfahren eine elektronische Dokumentenverwaltung und Vorgangsbearbeitung verschiedenartiger Dokumente zu erleichtern ist in vorteilhafter Weise vorgesehen, dass bei dem Hauptschritt H2 von dem Endgerät ein Dokumententyp an die Servereinrichtung übertragen wird. Der Dokumententyp kann beispielsweise eine Restaurantquittung, ein Kassenbon, eine Mietwagenquittung, eine Aufnahme eines verunfallten Fahrzeuges oder ein Flugticket sein. Der Dokumententyp kann alternativ auch ein bei einem für medizinische Zwecke eingesetzten bildgebenden Verfahren generiertes Bilddokument wie beispielsweise ein Röntgenbild oder eine Ultraschall-Aufnahme sein.

Um eine Manipulation der in dem Hauptschritt H3 in dem Zwischenspeicher zwischengespeicherten Bildinformationen und gegebenenfalls der Metadaten sowie gegebenenfalls des ersten Dokumentenschlüssels oder des zweiten Dokumentenschlüssels zu vermeiden oder zumindest zu erschweren ist vorzugsweise vorgesehen, dass den in dem Hauptschritt H3 in dem Serverzwischenspeicher zwischengespeicherten Bildinformationen eine elektronische Signatur beigefügt oder logisch mit den Bildinformationen verknüpft wird. Bei der elektronischen Signatur handelt es sich vorteilhafterweise um eine fortgeschrittene oder eine qualifizierte Signatur.

Um den Zeitpunkt der Aufnahme der gespeicherten Bildinformationen zu dokumentieren ist gemäß einer vorteilhaften Umsetzung des Verfahrens vorgesehenen, dass bei dem Hauptschritt H1 ein Zeitstempel erstellt wird, wobei die Metadaten den Zeitstempel umfassen.

Um die in dem Serverspeicher gespeicherten Bildinformationen dem jeweiligen Endgerät zuordnen zu können ist vorzugsweise vorgesehen, dass die in dem Serverspeicher gespeicherten Metadaten die Gerätenummer und/oder den Dokumententyp umfassen.

Um eine ungewollte Manipulation der Bildinformationen durch Dritte oder einen Datenübertragungsfehler während der Übermittlung von dem Endgerät zu der Servereinrichtung zu ermitteln ist bei einer vorteilhaften Umsetzung des Erfindungsgedankens vorgesehen, dass vor oder bei der Übermittlung der Bildinformationen in Hauptschritt H2 von dem Endgerät eine Bildprüfsumme aus den Bildinformationen ermittelt wird, wobei die von dem Endgerät an die Servereinrichtung übermittelten Metadaten die Bildprüfsumme umfassen. Bei einem zeitlichen Versatz zwischen der Aufnahme der Bildinformationen in Hauptschritt H1 und der Übermittlung der Bildinformationen in Hauptschritt H2 ist es möglich und erfindungsgemäß optional vorgesehen, dass unmittelbar nach Aufnahme der Bildinformationen in Hauptschritt H1 die Bildprüfsumme aus den Bildinformationen gebildet wird.

Um eine ungewollte Manipulation der Metadaten durch Dritte oder einen Datenübertragungsfehler während der Übermittlung von dem Endgerät zu der Servereinrichtung zu ermitteln ist in vorteilhafter Weise vorgesehen, dass vor oder bei der Übermittlung der Bildinformationen in Hauptschritt H2 auf dem Endgerät eine Metadatenprüfsumme der Metadaten und des Geräteschlüssels ermittelt wird, wobei die Metadatenprüfsumme von dem Endgerät an die Servereinrichtung übermittelt wird, wobei auf der Servereinrichtung aus den von dem Endgerät übermittelten Metadaten sowie aus dem in dem Serverspeicher der Servereinrichtung gespeicherten Geräteschlüssels die Metadatenprüfsumme ermittelt wird, so dass bei der Identität der von dem Endgerät übermittelten und der auf der Servereinrichtung ermittelten Metadatenprüfsumme die Integrität der an die Servereinrichtung übermittelten Metadaten und gegebenenfalls der Bildinformationen gewährleistet wird.

Gemäß einer vorteilhaften Ausgestaltung des Erfindungsgedankens ist vorgesehen, dass die Authentifizierungsprüfsumme und/oder die Bildprüfsumme und/oder die Metadatenprüfsumme mit einem sicheren Hash-Algorithmus ermittelt wird. In dem Verfahren ermittelte Prüfsummen können mit einem dem Stand der Technik angepassten, sicheren Hash-Algorithmus ermittelt werden. Beispielsweise kann ein sicherer Hash-Algorithmus der zweiten Generation, auch als SHA-2 bekannt, wie beispielsweise SHA-256 oder SHA-512 verwendet werden. Vorteilhafterweise wird ein von dem Bundesamt für Sicherheit in der Informationstechnik als sicher erachteter sicheren Hash-Algorithmus verwendet.

Um eine Manipulation der Bildinformationen auf dem Endgerät auszuschließen oder zumindest zu erschweren ist gemäß einer vorteilhaften Umsetzung des Erfindungsgedankens vorgesehen, dass sich der Hauptschritt H2 zeitlich unverzögert an den Hauptschritt H1 anschließt. Bei einer derartigen Ausgestaltung können die Bildinformationen vorteilhafterweise nur in einem flüchtigen Endgerätezwischenspeicher zwischengespeichert werden und verbleiben nicht in einem nicht flüchtigen Endgerätespeicher. Hierbei kann ein Bereich des Arbeitsspeichers des Endgeräts den Endgerätezwischenspeicher umfassen. Alternativ können die Bildinformationen spätestens nach Beendigung des Verfahrens in dem Endgerätespeicher gelöscht werden.

Vorzugsweise wird unmittelbar nach Aufnahme der Bildinformationen in Hauptschritt H1 die Bildprüfsumme aus den Bildinformationen gebildet und zeitlich unverzögert die Bildinformationen zusammen mit der Bildprüfsumme in Hauptschritt H4 von dem Endgerät an die Servereinrichtung übermittelt.

Um eine nicht offenkundige Manipulation durch eine zeitliche Verzögerung zwischen den Hauptschritten zu unterbinden ist vorzugsweise vorgesehen, dass das Endgerät und/oder die Servereinrichtung das Verfahren bei einer Unterbrechung die Datenverbindung zwischen dem Endgerät und der Servereinrichtung zwischen den Hauptschritten H1 bis H4 abbricht. Eine Manipulation der zwischen dem Endgerät und der Servereinrichtung übermittelten Bildinformationen und Metadaten ist gegebenenfalls nur mit einem sehr hohen Rechenaufwand durchführbar. Bei einem Abbruch des Verfahrens kann bei einer erneuten Durchführung des Verfahrens zumindest der geänderte erste Dokumentenschlüssel und gegebenenfalls der geänderte Zeitstempel verwendet werden, so dass bei der erneuten Durchführung des Verfahrens beispielsweise die Metadatenprüfsumme und die Bildinformationsprüfsumme neu ermittelt werden.

Um die Datenübertragung zwischen dem Endgerät und der Servereinrichtung verschlüsselt auszugestalten ist in vorteilhafter Weise vorgesehen, dass das Endgerät und die Servereinrichtung mit Mitteln ausgestattet sind um eine verschlüsselte Ende zu Ende Datenübertragung zwischen dem Endgerät und der Servereinrichtung zu ermöglichen.

Gemäß einer vorteilhaften Umsetzung des Erfindungsgedankens ist vorgesehen, dass bei dem Hauptschritt H3 mit einem Textinformationserkennungsprogramm Dokumententextinformationen automatisiert aus den Bildinformationen ermittelt werden. Es ist auch möglich und erfindungsgemäß optional vorgesehen, dass die aus den Bildinformationen automatisiert ermittelten Dokumententextinformationen von einem Sachbearbeiter manuell überprüft und gegebenenfalls korrigiert werden. Vorzugsweise kann die Einspeicherbedingung von der Servereinrichtung mittels der Dokumententextinformationen automatisiert überprüft werden.

Um die elektronische Dokumentenverwaltung und Vorgangsbearbeitung zu erleichtern ist vorzugsweise vorgesehen, dass die Dokumententextinformationen automatisiert in Abhängigkeit von dem Dokumententyp auf eine Ähnlichkeit mit auf der Servereinrichtung für den jeweiligen Dokumententyp hinterlegten Dokumententypinformationen verglichen werden.

Es ist möglich und erfindungsgemäß optional vorgesehen, dass die Servereinrichtung in Hauptschritt H4 bei einer hinreichenden Übereinstimmung zwischen den Dokumententextinformationen und den Dokumententypinformationen die vorgegebene Einspeicherbedingung als erfüllt bestimmt. Bei einer hinreichenden Abweichung der Dokumententextinformationen von den Dokumententypinformationen kann das Verfahren von der Servereinrichtung beendet werden.

In vorteilhafter Weise ist vorgesehen, dass bei dem Nebenschritt N2 und/oder bei dem Bestätigungsschritt B1 ein Dokumententextauszug der Dokumententextinformation auf dem Endgerät dargestellt wird. Derart kann durch den Nutzer für die elektronische Dokumentenverwaltung und Vorgangsbearbeitung der besonders relevante Dokumententextauszug verifiziert werden.

Der Dokumententextauszug kann in vorteilhafter Weise durch ein Mittel zur automatisierten Syntaxanalyse aus den Dokumententextinformation ermittelt werden. Es ist auch möglich und erfindungsgemäß optional vorgesehen, dass der Textauszug mit einer Vielzahl verschiedener Mittel zur automatisierten Syntaxanalyse aus den Dokumententextinformation ermittelt wird, wobei mit einem Mittel zur Bewertung der automatisierten Syntaxanalyse ein Ergebnis eines der Mittel zur automatisierten Syntaxanalyse als der Textauszug bestimmt wird.

Um eine Dokumentenvorbereitung des Dokuments einfacher auszugestalten ist vorzugsweise vorgesehen, dass das Dokument ein einseitig bedruckter Papierbogen, bevorzugt eine einseitig bedruckte Quittung ist.

Gemäß einer vorteilhaften Umsetzung des Verfahrens ist vorgesehen, dass der Dokumententextauszug eine auf dem Dokument abgebildete Gesamtsumme ist. Der Dokumententextauszug kann beispielsweise auch ein Fremdwährungssymbol umfassen.

Um für die Verwendung des Verfahrens auf verfügbare Endgeräte zurückgreifen zu können ist in vorteilafter Weise vorgesehen, dass das Endgerät ein Smartphone oder ein tastaturloser Computer in Flachbauweise ist.

Die Erfindung betrifft auch ein Computerprogrammprodukt für die Ausführung des wie vorangehend beschriebenen Verfahrens auf einem Endgerät.

Um das Verfahren durchführen zu können ist ein Computerprogrammprodukt, umfassend Befehle, vorgesehen für die Ausführung des Verfahrens nach einem der vorangehenden Ansprüche auf einem Endgerät.

Nachfolgend werden einige Ausführungsbeispiel des Erfindungsgedankens näher erläutert, die in der Zeichnung dargestellt ist.

Es zeigen:
Figur 1 eine schematische Darstellung des Verfahrens in Form eines Flussdiagramms,
Figur 2 schematisch eine Darstellung von Metadaten einer alternativen Ausführungsform des Verfahrens und
Figuren 3 und 4 jeweils eine schematische Darstellung einer weiteren alternativen Ausführungsform des Verfahrens.

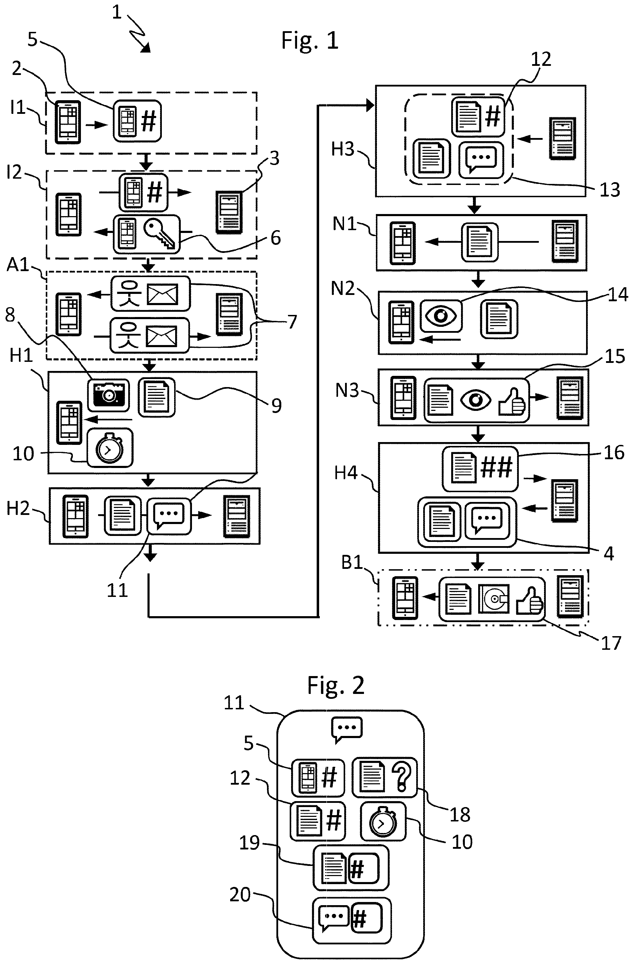

In Figur 1 ist eine Ausführungsform eines erfindungsgemäßen Verfahrens 1 in einem Flussdiagramm mit der Kommunikation zwischen einem Endgerät 2 und einer Servereinrichtung 3 schematisch dargestellt.

In einem ersten Initialisierungsschritt I1 wird an dem Endgerät 2 einmalig bei einer ersten Inbetriebnahme des Endgeräts 2 von dem Endgerät 2 eine eindeutig in einem Serverspeicher 4 der Servereinrichtung 3 zuordenbare Gerätenummer 5 vergeben. In einem zweiten einmaligen Initialisierungsschritt I2 wird die Gerätenummer 5 von dem Endgerät 2 an die Servereinrichtung 3 übermittelt gefolgt von einer Übermittlung eines an der Servereinrichtung 3 bestimmten Geräteschlüssels 6 von der Servereinrichtung 3 an das Endgerät 2.

In einem Authentifizierungsschritt A1 werden Zugangsdaten 7 eines sich an dem Endgerät 2 anmeldenden Nutzers ermittelt und von dem Endgerät 2 an die Servereinrichtung 3 übermittelt.

In einem Hauptschritt H1 werden von dem Nutzer ausgelöst mit einer Kameraeinrichtung 8 des Endgeräts 2 Bildinformationen 9 eines Dokuments aufgenommen und ein Zeitstempel 10 erstellt. In einem Hauptschritt H2 werden die Bildinformationen 9 des Dokuments zusammen mit den Bildinformationen 9 zugeordneten Metadaten 11 an die Servereinrichtung 3 übermittelt. Die Metadaten 11 umfassen in der hier dargestellten Ausführungsform des Verfahrens 1 den Zeitstempel 10. In einem Hauptschritt H3 werden die Bildinformationen 9 und die dazugehörigen Metadaten 11 zusammen mit einem von der Servereinrichtung 3 generierten ersten Dokumentenschlüssel 12 in einem Serverzwischenspeicher 13 der Servereinrichtung 3 zwischengespeichert.

In einem Nebenschritt N1 werden die Bildinformationen 9 von der Servereinrichtung 3 an das Endgerät 2 rückübermittelt. In einem Nebenschritt N2 wird von dem Nutzer eine Bildinformationenverifikation 14 der von der Servereinrichtung 3 an das Endgerät 2 ruckübermittelten Bildinformationen 9 durchgeführt.

Nach der erfolgten Bildinformationenverifikation 14 wird in einem Nebenschritt N3 von dem Endgerät 2 eine Verifizierungsbestätigung 15 an die Servereinrichtung 3 übermittelt. Mit Erhalt der Verifizierungsbestätigung 15 durch die Servereinrichtung 3 ist bei der hier dargestellten Ausführungsform eine Einspeicherbedingung eines Hauptschritts H4 erfüllt, so dass die Servereinrichtung 3 in dem Hauptschritt H4 einen fortlaufenden zweiten Dokumentenschlüssel 16 erstellt und die Bildinformationen 9 zusammen mit den den zweiten Dokumentenschlüssel 16 umfassenden Metadaten 11 in dem Serverspeicher 4 speichert. Im Anschluss daran übermittelt die Servereinrichtung 3 in einem Bestätigungsschritt B1 eine Speicherbestätigung 17 an das Endgerät 2.

In Figur 2 sind die in einer weiteren Ausführungsform des Verfahrens 1 in dem Hauptschritt H2 von dem Endgerät 2 zusammen mit den Bildinformationen 9 an die Servereinrichtung 3 übermittelten Metadaten 11 schematisch dargestellt. Die Metadaten 11 umfassen hier die Gerätenummer 5, den ersten Dokumentenschlüssel 12, einen Dokumententyp 18 und den Zeitstempel 10. Darüber hinaus umfassen die Metadaten 11 eine aus den Bildinformationen 9 ermittelte Bildprüfsumme 19 und eine aus den Metadaten 11 und dem Geräteschlüssel 6 ermittelte Metadatenprüfsumme 20.

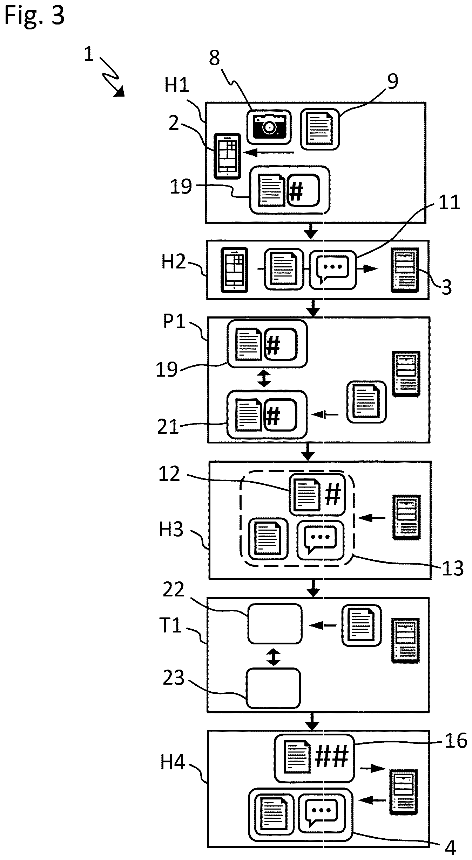

In Figur 3 ist eine weitere alternative Ausführungsform des erfindungsgemäßen Verfahrens 1 in einem Flussdiagramm dargestellt. In Hauptschritt H1 werden die Bildinformationen 9 von dem Nutzer mit der Kameraeinrichtung 8 des Endgeräts 2 aufgenommen und von dem Endgerät 2 eine Bildprüfsumme 19 der Bildinformationen 9 erzeugt.

In Hauptschritt H2 werden die Bildinformationen 9 zusammen mit den die Bildprüfsumme 19 umfassenden Metadaten 11 an die Servereinrichtung 3 übermittelt.

In einem Prüfschritt P1 wird von der Servereinrichtung 3 eine Bildprüfsumme 21 aus den von der Servereinrichtung erhaltenden Bilddaten 9 erzeugt und mit der von dem Endgerät erzeugten Bildprüfsumme 19 verglichen. Weicht die von dem Endgerät 2 erzeugte Bildprüfsumme 19 von der von der Servereinrichtung 3 erzeugten Bildprüfsumme 21 ab, so wird das Verfahren 1 von der Servereinrichtung 3 abgebrochen. Bei Abbruch des Verfahrens 1 wird von der Servereinrichtung 3 eine Fehlermeldung an das Endgerät 2 übermittelt.

Bei identischen Bildprüfsummen 19, 21 werden in dem Hauptschritt H3 die Bildinformationen 9 und die dazugehörigen Metadaten 11 zusammen mit dem von der Servereinrichtung 3 generierten ersten Dokumentenschlüssel 12 in dem Serverzwischenspeicher 13 der Servereinrichtung 3 zwischengespeichert.

In einem Texterkennungsschritt T1 werden Dokumententextinformationen 22 automatisiert von der Servereinrichtung 3 mit einem Textinformationserkennungsprogramm aus den Bildinformationen 9 des Dokuments ermittelt und anschließend mit für den Dokumententyp 18 hinterlegten Dokumententypinformationen 23 automatisiert verglichen. Bei Abweichungen der Dokumententextinformationen 22 von den Dokumententypinformationen 23 wird das Verfahren 1 von der Servereinrichtung 3 abgebrochen. Gleichen die Dokumententextinformationen 22 den Dokumententypinformationen 23 hinreichend so ist die Einspeicherbedingung für Hauptschritt H4 erfüllt.

In Hauptschritt H4 wird von der Servereinrichtung 3 der eindeutig den Bildinformationen 9 zuordenbare, fortlaufende zweite Dokumentenschlüssel 16 erstellt und zusammen mit den Bildinformationen 9 in dem Serverspeicher 4 gespeichert.

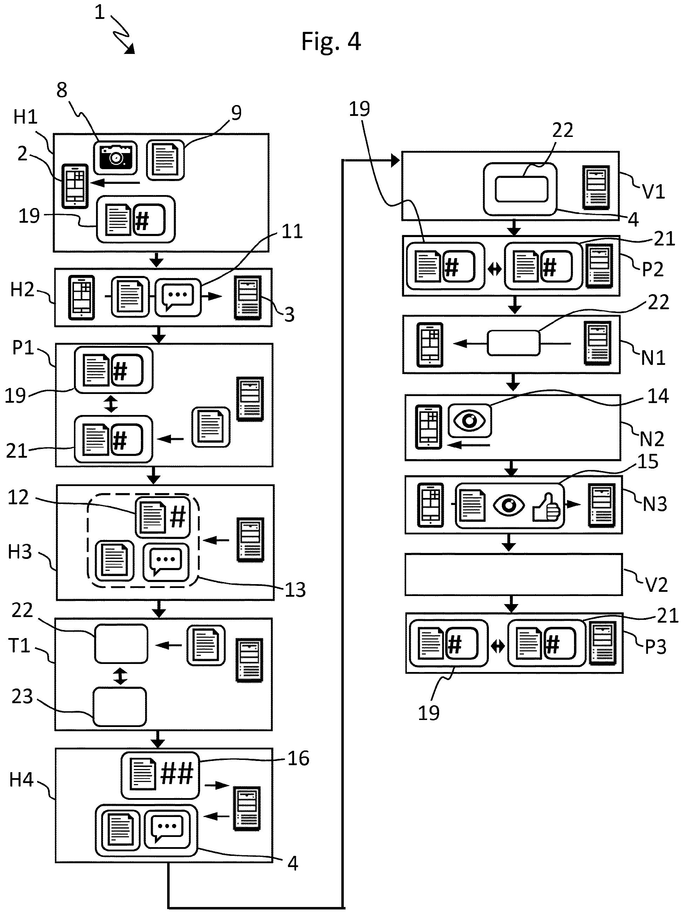

In Figur 4 ist eine weitere alternative Ausführungsform des erfindungsgemäßen Verfahrens 1 in einem Flussdiagramm dargestellt, wobei der Ablauf des hier dargestellten Verfahrens 1 von dem Hauptschritt H1 bis zu dem Hauptschritt H4 identisch zu dem in Figur 3 dargestellten Verfahren 1 ist.

Bei der hier dargestellten Ausführungsform des Verfahrens 1 schließt sich an den Hauptschritt H1 ein Verifikationsschritt V1 an, bei welchem die in dem Serverspeicher 4 zusammen mit den Bildinformationen 9 gespeicherten Dokumententextinformationen 22 bezüglich vorher definierter Entsprechungseigenschaften überprüft werden. Entsprechen die Dokumententextinformationen 22 den Entsprechungseigenschaften hinreichend so wird den Metadaten 11 ein Dokumentenstatus mit dem Wert "Dokument überprüfen" hinzugefügt sowie das Verfahren 1 fortgesetzt und ansonsten das Verfahren 1 abgebrochen.

Nach dem Verifikationsschritt V1 wird in einem Prüfschritt P2 die von dem Endgerät 2 erstellte Bildprüfsumme 19 mit einer erneut von der Servereinrichtung 3 erzeugten Bildprüfsumme 21 verglichen und bei Abweichung der beiden Bildprüfsummen 19, 21 das Verfahren 1 abgebrochen und der Dokumentenstatus von dem Wert "Dokument überprüfen" auf den Wert "Dokument gesperrt" gesetzt.

Die Dokumententextinformationen 22 werden in dem Nebenschritt N1 von der Servereinrichtung 3 an das Endgerät 2 übermittelt und in dem Nebenschritt N2 von dem Nutzer an dem Endgerät 2 verifiziert. In dem Nebenschritt N3 wird die Verifizierungsbestätigung 15 von dem Endgerät 2 an die Servereinrichtung 3 übermittelt.

In einem darauffolgenden Verifikationsspeicherschritt V2 wird der Dokumentenstatus von dem Wert "Dokument überprüfen" auf den Wert "Dokument überprüft" gesetzt.

Abschließend werden in einem Prüfschritt P3 die von dem Endgerät 2 erstellte Bildprüfsumme 19 mit einer erneut von der Servereinrichtung 3 erzeugten Bildprüfsumme 21 verglichen und bei Abweichung der beiden Bildprüfsummen 19, 21 das Verfahren 1 abgebrochen und der Dokumentenstatus von dem Wert "Dokument überprüft" auf den Wert "Dokument gesperrt" gesetzt.

## Patentansprüche

1. Verfahren (1) zur Aufnahme von Bildinformationen (9) mit einem mobilen Endgerät (2) und Übertragung der Bildinformationen (9) an eine mit dem Endgerät (2) datenleitend verbundene Servereinrichtung (3), wobei mit einer Kameraeinrichtung (8) des mobilen Endgeräts (2) von einem Nutzer ausgelöst die Bildinformationen (9) eines Dokuments aufgenommen werden, wobei in einem Hauptschritt H1 die Bildinformationen (9) von dem Nutzer mit der Kameraeinrichtung (8) des Endgeräts (2) aufgenommen werden, wobei in einem Hauptschritt H2 das Endgerät (2) die Bildinformationen (9) und Metadaten (11) an die Servereinrichtung (3) übermittelt,
**dadurch gekennzeichnet, dass** in einem Hauptschritt H3 die Servereinrichtung (3) die Bildinformationen (9) zusammen mit einem den Bildinformationen (9) eindeutig zuordenbaren ersten Dokumentenschlüssel (12) in einem Serverzwischenspeicher (13) der Servereinrichtung (3) zwischenspeichert
und wobei in einem Hauptschritt H4 die Servereinrichtung (3) die Bildinformationen (9) zusammen mit einem innerhalb eines nicht flüchtigen Serverspeichers (4) eindeutig dem Dokument zuordenbaren zweiten Dokumentenschlüssel (16) in dem nicht flüchtigen Serverspeicher (4) speichert, wenn eine vorgegebene Einspeicherbedingung erfüllt ist.

2. Verfahren (1) nach Anspruch 1, **dadurch gekennzeichnet, dass** in einem ersten Nebenschritt N1 die Servereinrichtung (3) die Bildinformationen (9) des Dokuments und/oder aus den Bildinformationen (9) ermittelte Dokumentendaten des Dokuments an das Endgerät (2) rückübermittelt, wobei in einem Nebenschritt N2 der Nutzer an dem Endgerät (2) die Bildinformationen (9) und/oder die Dokumentendaten verifiziert und wobei in einem Nebenschritt N3 das Endgerät (2) eine Verifizierungsbestätigung (15) an die Servereinrichtung (3) übermittelt.

3. Verfahren (1) nach einem der Ansprüche 1 oder 2, **dadurch gekennzeichnet, dass** vor dem Hauptschritt H1 in einem ersten Initialisierungsschritt I1 das Endgerät (2) einmalig eine unverwechselbare Gerätenummer (5) bestimmt.

4. Verfahren (1) nach Anspruch 3, **dadurch gekennzeichnet, dass** vor dem Hauptschritt H1 in einem zweiten Initialisierungsschritt I2 das Endgerät (2) einmalig der Servereinrichtung (3) die Gerätenummer (5) übermittelt, wobei die Servereinrichtung (3) dem Endgerät (2) einmalig einen Geräteschlüssel (6) übermittelt, wobei die Servereinrichtung (3) die Gerätenummer (5) und den dazugehörigen Geräteschlüssel (6) in dem Serverspeicher (4) der Servereinrichtung (3) speichert.

5. Verfahren (1) nach einem der Ansprüche 3 oder 4, **dadurch gekennzeichnet, dass** vor dem Hauptschritt H1 der Nutzer sich in einem Authentifizierungsschritt A1 an dem Endgerät (2) mit persönlichen Zugangsdaten (7) anmeldet, wobei die Zugangsdaten (7) mit der Gerätenummer (5) von dem Endgerät (2) an die Servereinrichtung (3) übertragen werden und wobei von der Servereinrichtung (3) die Gerätenummer (5) zusammen mit den Zugangsdaten (7) des Nutzers in dem Serverspeicher (4) gespeichert werden.

6. Verfahren (1) nach Anspruch 5, **dadurch gekennzeichnet, dass** bei dem Authentifizierungsschritt A1 auf dem Endgerät (2) eine Authentifizierungsprüfsumme der Gerätenummer (5), der Zugangsdaten (7)und des Geräteschlüssels (6) ermittelt wird, wobei die Authentifizierungsprüfsumme von dem Endgerät (2) an die Servereinrichtung (3) übermittelt wird, wobei auf der Servereinrichtung (3) aus der von dem Endgerät (2) übermittelten Gerätenummer (5) wie auch aus der von dem Endgerät (2) übermittelten Zugangsdaten (7) sowie aus dem in dem Serverspeicher (4) gespeicherten und der Gerätenummer (5) zugeordneten Geräteschlüssel (6) die Authentifizierungsprüfsumme ermittelt wird, so dass bei einer Identität der von dem Endgerät (2) übermittelten und der auf der Servereinrichtung (3) ermittelten Authentifizierungsprüfsumme eine Integrität der an die Servereinrichtung (3) übermittelten Gerätenummer (5) wie auch der Zugangsdaten (7) gewährleistet wird.

7. Verfahren (1) nach einem der vorangehenden Ansprüche, **dadurch gekennzeichnet, dass** den in dem Hauptschritt H3 in dem Serverzwischenspeicher (13) zwischengespeicherten Bildinformationen (9) eine elektronische Signatur beigefügt oder logisch mit den Bildinformationen (9) verknüpft wird.

8. Verfahren (1) nach einem der vorangehenden Ansprüche, **dadurch gekennzeichnet, dass** vor oder bei der Übermittlung der Bildinformationen (9) in dem Hauptschritt H2 von dem Endgerät (2) eine Bildprüfsumme (19) aus den Bildinformationen (9) ermittelt wird, wobei die von dem Endgerät (2) an die Servereinrichtung (3) übermittelten Metadaten (11) die Bildprüfsumme (19) umfassen.

9. Verfahren (1) nach einem der Ansprüche 4 bis 8, **dadurch gekennzeichnet, dass** vor oder bei der Übermittlung der Bildinformationen in dem Hauptschritt H4 auf dem Endgerät (2) eine Metadatenprüfsumme (20) der Metadaten (11) und des Geräteschlüssels (6) ermittelt wird, wobei die Metadatenprüfsumme (20) von dem Endgerät (2) an die Servereinrichtung (3) übermittelt wird, wobei auf der Servereinrichtung (3) aus den von dem Endgerät (2) übermittelten Metadaten (11) sowie aus dem in dem Serverspeicher (4) der Servereinrichtung (3) gespeicherten Geräteschlüssel (6) die Metadatenprüfsumme (20) ermittelt wird, so dass bei der Identität der von dem Endgerät (2) übermittelten und der auf der Servereinrichtung (3) ermittelten Metadatenprüfsumme (20) die Integrität der an die Servereinrichtung (3) übermittelten Metadaten (11) und gegebenenfalls der Bildinformationen (9) gewährleistet wird.

10. Verfahren (1) nach einem der Ansprüche 6 bis 9, **dadurch gekennzeichnet, dass** die Authentifizierungsprüfsumme und/oder die Bildprüfsumme (19) und/oder die Metadatenprüfsumme (20) mit einem sicheren Hash-Algorithmus ermittelt wird.

11. Verfahren (1) nach einem der vorangehenden Ansprüche, **dadurch gekennzeichnet, dass** sich der Hauptschritt H2 zeitlich unverzögert an den Hauptschritt H1 anschließt.

12. Verfahren (1) nach einem der vorangehenden Ansprüche, **dadurch gekennzeichnet, dass** das Endgerät (2) und/oder die Servereinrichtung (3) das Verfahren (1) bei einer Unterbrechung einer Datenverbindung zwischen dem Endgerät (2) und der Servereinrichtung (3) zwischen den Hauptschritten H1 und H2 abbricht.

13. Verfahren (1) nach einem der vorangehenden Ansprüche, **dadurch gekennzeichnet, dass** das Endgerät (2) und die Servereinrichtung (3) mit Mitteln ausgestattet sind, um eine verschlüsselte Ende zu Ende Datenübertragung zwischen dem Endgerät (2) und der Servereinrichtung (3) zu ermöglichen.

14. Verfahren (1) nach einem der vorangehenden Ansprüche, **dadurch gekennzeichnet, dass** bei dem Hauptschritt H3 mit einem Textinformationserkennungsprogramm Dokumententextinformationen (22) automatisiert aus den Bildinformationen ermittelt werden.

15. Verfahren (1) nach Anspruch 14, **dadurch gekennzeichnet, dass** die Dokumententextinformationen (22) automatisiert in Abhängigkeit von dem Dokumententyp (18) auf eine Ähnlichkeit mit auf der Servereinrichtung (3) für den jeweiligen Dokumententyp (18) hinterlegten Dokumententypinformationen (23) verglichen werden, wobei bei einer Abweichung der Dokumententextinformationen (22) von den Dokumententypinformationen (23) das Verfahren (1) von der Servereinrichtung (3) beendet wird.

## Claims

1. Method (1) for recording image information (9) using a mobile terminal (2) and for transmitting the image information (9) to a server device (3) connected to the terminal (2) for data transfer, wherein the image information (9) of a document is recorded with a camera device (8) of the mobile terminal (2), initiated by a user, wherein in a main step H1 the image information (9) is recorded by the user using the camera device (8) of the terminal (2), wherein in a main step H2 the terminal (2) transmits the image information (9) and metadata (11) to the server device (3),
**characterised in that** in a main step H3 the server device (3) temporarily stores the image information (9) together with a first document key (12), which is uniquely assignable to the image information (9), in a server cache (13) of the server device (3)
and wherein in a main step H4 the server device (3) stores the image information (9) together with a second document key (16), which is uniquely assignable to the document within a non-volatile server memory (4), in the non-volatile server memory (4) if a predefined storage condition is satisfied.

2. Method (1) according to claim 1, **characterised in that** in a first substep N1 the server device (3) returns the image information (9) of the document and/or document data of the document determined from the image information (9) to the terminal (2), wherein in a substep N2 the user verifies the image information (9) and/or the document data at the terminal (2) and wherein in a substep N3 the terminal (2) transmits a verification confirmation (15) to the server device (3).

3. Method (1) according to one of claims 1 or 2, **characterised in that** prior to the main step H1, in a first initialisation step I1, the terminal (2) determines a unique device number (5) once only.

4. Method (1) according to claim 3, **characterised in that** prior to the main step H1, in a second initialisation step 12, the terminal (2) transmits the device number (5) once only to the server device (3), wherein the server device (3) transmits a device key (6) once only to the terminal (2), wherein the server device (3) stores the device number (5) and the associated device key (6) in the server memory (4) of the server device (3).

5. Method (1) according to one of claims 3 or 4, **characterised in that** prior to the main step H1, the user logs on to the terminal (2) with personal access data (7) in an authentication step A1, wherein the access data (7) together with the device number (5) is transmitted by the terminal (2) to the server device (3) and wherein the device number (5) together with the access data (7) of the user is stored by the server device (3) in the server memory (4).

6. Method (1) according to claim 5, **characterised in that** in the authentication step A1 an authentication checksum of the device number (5), the access data (7) and the device key (6) is determined on the terminal (2), wherein the authentication checksum is transmitted by the terminal (2) to the server device (3), wherein on the server device (3) the authentication checksum is determined from the device number (5) transmitted by the terminal (2) and from the access data (7) transmitted by the terminal (2) and from the device key (6) stored in the server memory (4) and assigned to the device number (5), such that, if the authentication checksum transmitted by the terminal (2) and that determined on the server device (3) are identical, the integrity of the device number (5) transmitted to the server device (3) and of the access data (7) is ensured.

7. Method (1) according to one of the preceding claims, **characterised in that** an electronic signature is appended to the image information (9) temporarily stored in the server cache (13) in the main step H3 or is logically linked to the image information (9).

8. Method (1) according to one of the preceding claims, **characterised in that** prior to or during the transmission of the image information (9) in the main step H2, an image checksum (19) is determined by the terminal (2) from the image information (9), wherein the metadata (11) transmitted by the terminal (2) to the server device (3) includes the image checksum (19).

9. Method (1) according to one of claims 4 to 8, **characterised in that** prior to or during the transmission of the image information in the main step H4, a metadata checksum (20) of the metadata (11) and the device key (6) is determined on the terminal (2), wherein the metadata checksum (20) is transmitted by the terminal (2) to the server device (3), wherein on the server device (3) the metadata checksum (20) is determined from the metadata (11) transmitted by the terminal (2) and from the device key (6) stored in the server memory (4) of the server device (3), such that, if the metadata checksum (20) transmitted by the terminal (2) and that determined on the server device (3) are identical, the integrity of the metadata (11) transmitted to the server device (3) and where applicable of the image information (9) is ensured.

10. Method (1) according to one of claims 6 to 9, **characterised in that** the authentication checksum and/or the image checksum (19) and/or the metadata checksum (20) are determined using a secure hash algorithm.

11. Method (1) according to one of the preceding claims, **characterised in that** the main step H2 follows immediately after the main step H1.

12. Method (1) according to one of the preceding claims, **characterised in that** the terminal (2) and/or the server device (3) terminates the method (1) if a data connection between the terminal (2) and the server device (3) is interrupted between the main steps H1 and H2.

13. Method (1) according to one of the preceding claims, **characterised in that** the terminal (2) and the server device (3) are equipped with means for permitting an end-to-end encrypted data transmission between the terminal (2) and the server device (3).

14. Method (1) according to one of the preceding claims, **characterised in that** in the main step H3 document text information (22) is determined from the image information in an automated manner using a text information recognition program.

15. Method (1) according to claim 14, **characterised in that** the document text information (22) is compared in an automated manner, depending on the document type (18), for similarity to document type information (23) stored on the server device (3) for the respective document type (18), wherein in the event of a deviation of the document text information (22) from the document type information (23), the method (1) is ended by the server device (3).

## Revendications

1. Procédé (1) pour l'enregistrement d'informations d'image (9) au moyen d'un dispositif terminal (2) mobile et la transmission des informations d'image (9) à un dispositif serveur (3) connecté pour transmission de données au dispositif terminal (2), les informations d'image (9) d'un document étant enregistrées au moyen d'un dispositif de caméra (8) du dispositif terminal (2) mobile de manière déclenchée par un utilisateur, les informations d'image (9) étant enregistrées par l'utilisateur au moyen du dispositif de caméra (8) du dispositif terminal (2) dans une étape principale H1, le dispositif terminal (2) transmettant les informations d'image (9) et des métadonnées (11) au dispositif serveur (3) dans une étape principale H2,
**caractérisé en ce que**, dans une étape principale H3, le dispositif serveur (3) enregistre temporairement les informations d'image (9) conjointement avec une première clé de document (12) pouvant être associée de manière univoque aux informations d'image (9) dans une mémoire tampon de serveur (13) du dispositif serveur (3)
et dans lequel, dans une étape principale H4, le dispositif serveur (3) enregistre les informations d'image (9) dans une mémoire de serveur (4) non volatile, conjointement avec une seconde clé de document (16) qui, dans ladite mémoire de serveur (4) non volatile, peut être associée de manière univoque au document quand une condition d'enregistrement prédéfinie est remplie.

2. Procédé (1) selon la revendication 1, **caractérisé en ce que**, dans une première étape secondaire N1, le dispositif serveur (3) transmet en retour les informations d'image (9) du document et/ou des données de document relatives au document déterminées à partir des informations d'image (9) au dispositif terminal (2), l'utilisateur vérifiant les informations d'image (9) et/ou les données de document sur le dispositif terminal (2) dans une étape secondaire N2 et le dispositif terminal (2) transmettant une confirmation de vérification (15) au dispositif serveur (3) dans une étape secondaire N3.

3. Procédé (1) selon l'une des revendications 1 ou 2, **caractérisé en ce que**, avant l'étape principale H1, dans une première étape d'initialisation I1, le dispositif terminal (2) détermine une unique fois un numéro de dispositif (5) univoque.

4. Procédé (1) selon la revendication 3, **caractérisé en ce que**, avant l'étape principale H1, dans une seconde étape d'initialisation 12, le dispositif terminal (2) transmet une unique fois le numéro de dispositif (5) au dispositif serveur (3), le dispositif serveur (3) transmettant une unique fois une clé de dispositif (6) au dispositif terminal (2), le dispositif serveur (3) enregistrant le numéro de dispositif (5) et la clé de dispositif (6) associée dans la mémoire de serveur (4) du dispositif serveur (3).

5. Procédé (1) selon l'une des revendications 3 ou 4, **caractérisé en ce que**, avant l'étape principale H1, dans une étape d'authentification A1, l'utilisateur se connecte sur le dispositif terminal (2) avec des données d'accès (7) personnelles, les données d'accès (7) étant transmises, avec le numéro de dispositif (5), au dispositif serveur (3) par le dispositif terminal (2) et le numéro de dispositif (5) étant enregistré par le dispositif serveur (3), conjointement avec les données d'accès (7) de l'utilisateur dans la mémoire de serveur (4).

6. Procédé (1) selon la revendication 5, **caractérisé en ce que**, lors de l'étape d'authentification A1, un total de contrôle d'authentification du numéro de dispositif (5), des données d'accès (7) et de la clé de dispositif (6) est déterminé sur le dispositif terminal (2), le total de contrôle d'authentification étant transmis au dispositif serveur (3) par le dispositif terminal (2), le total de contrôle d'authentification étant déterminé sur le dispositif serveur (3) à partir du numéro de dispositif (5) transmis par le dispositif terminal (2) ainsi qu'à partir des données d'accès (7) transmises par le dispositif terminal (2) et à partir de la clé de dispositif (6) associée au numéro de dispositif (5) et enregistrée dans la mémoire de serveur (4), de telle sorte que, lors d'une identité du total de contrôle d'authentification transmis par le dispositif terminal (2) et de celui déterminé sur le dispositif serveur (3), une intégrité du numéro de dispositif (5) transmis au dispositif serveur (3) ainsi que des données d'accès (7) est assurée.

7. Procédé (1) selon l'une des revendications précédentes, **caractérisé en ce qu'**une signature électronique est ajoutée aux informations d'image (9) enregistrées temporairement dans la mémoire tampon de serveur (13) dans l'étape principale H3 ou est reliée par une opération logique aux informations d'image (9).

8. Procédé (1) selon l'une des revendications précédentes, **caractérisé en ce que** avant ou lors de la transmission des informations d'image (9) dans l'étape principale H2, un total de contrôle d'image (19) est déterminé par le dispositif terminal (2) à partir des informations d'image (9), les métadonnées (11) transmises au dispositif serveur (3) par le dispositif terminal (2) comprenant le total de contrôle d'image (19).

9. Procédé (1) selon l'une des revendications 4 à 8, **caractérisé en ce que** avant ou lors de la transmission des informations d'image dans l'étape principale H4, un total de contrôle de métadonnées (20) des métadonnées (11) et de la clé de dispositif (6) est déterminé sur le dispositif terminal (2), le total de contrôle de métadonnées (20) étant transmis au dispositif serveur (3) par le dispositif terminal (2), le total de contrôle de métadonnées (20) étant déterminé sur le dispositif serveur (3) à partir des métadonnées (11) transmises par le dispositif terminal (2) ainsi qu'à partir de la clé de dispositif (6) enregistrée dans la mémoire de serveur (4) du dispositif serveur (3), de telle sorte que, lors de l'identité du total de contrôle de métadonnées (20) transmis par le dispositif terminal (2) et de celui déterminé par le dispositif serveur (3), l'intégrité des métadonnées (11) et le cas échéant des informations d'image (9) transmises au dispositif serveur (3) est assurée.

10. Procédé (1) selon l'une des revendications 6 à 9, **caractérisé en ce que** le total de contrôle d'authentification et/ou le total de contrôle d'image (19) et/ou le total de contrôle de métadonnées (20) sont déterminés au moyen d'un algorithme de hachage sûr.

11. Procédé (1) selon l'une des revendications précédentes, **caractérisé en ce que** l'étape principale H2 suit l'étape principale H1 sans temporisation.

12. Procédé (1) selon l'une des revendications précédentes, **caractérisé en ce que** le dispositif terminal (2) et/ou le dispositif serveur (3) interrompt le procédé (1) entre les étapes principales H1 et H2 lors d'une interruption d'une liaison de données entre le dispositif terminal (2) et le dispositif serveur (3).

13. Procédé (1) selon l'une des revendications précédentes, **caractérisé en ce que** le dispositif terminal (2) et le dispositif serveur (3) sont équipés de moyens permettant une transmission de données de bout en bout chiffrée entre le dispositif terminal (2) et le dispositif serveur (3).

14. Procédé (1) selon l'une des revendications précédentes, **caractérisé en ce que**, lors de l'étape principale H3, des informations de texte de document (22) sont déterminées de manière automatisée à partir des informations d'image au moyen d'un programme de reconnaissance d'informations de texte.

15. Procédé (1) selon la revendication 14, **caractérisé en ce que** les informations de texte de document (22) sont comparées de manière automatisée en fonction du type de document (18) pour chercher une similitude avec des informations de type de document (23) stockées sur le dispositif serveur (3) pour le type de document (18) respectif, dans lequel, en cas d'écart entre les informations de texte de document (22) et les informations de type de document (23), le procédé (1) est arrêté par le dispositif serveur (3).
